# EUROPEAN PATENT SPECIFICATION

(11) **EP 3 834 447 B1**
(45) Date of publication and mention of the grant of the patent: **27.08.2025**
(21) Application number: 19745800.3
(22) Date of filing: 28.06.2019
(51) Int. Cl.: H04W 12/04, H04W 76/27

(54) **USER EQUIPMENT AND METHOD IN A WIRELESS COMMUNICATIONS NETWORK**
BENUTZERGERÄT UND VERFAHREN IN EINEM DRAHTLOSEN KOMMUNIKATIONSNETZ
ÉQUIPEMENT D'UTILISATEUR ET PROCÉDÉ DANS UN RÉSEAU DE COMMUNICATION SANS FIL

(30) Priority: 06.08.2018 US 201862714803 P
(43) Date of publication of application: 16.06.2021
(73) Proprietor: TELEFONAKTIEBOLAGET LM ERICSSON (PUBL), 164 83 Stockholm (SE)
(72) Inventor: TEYEB, Oumer, 171 44 Solna (SE); DA SILVA, Icaro L. J., 170 77 Solna (SE)
(74) Representative: Zacco Sweden AB
(86) International application number: PCT/SE2019/050637
(87) International publication number: WO 2020/032850

(56) References cited:
- WO-A1-2017/048170
- WO-A1-2018/202941
- NOKIA ET AL: "RRC connection establishment, re-establishment and resume", vol. RAN WG2, no. Hangzhou, China; 20170515 - 20170519, 14 May 2017 (2017-05-14), XP051275716, Retrieved from the Internet <URL:http://www.3gpp.org/ftp/Meetings_3GPP_SYNC/RAN2/Docs/> [retrieved on 20170514]
- ERICSSON (RAPPORTEUR): "Introduction of SA", no. Busan, South Korea; 20180521 - 20180525, 7 June 2018 (2018-06-07), XP051520562, Retrieved from the Internet <URL:http://www.3gpp.org/ftp/tsg%5Fran/WG2%5FRL2/TSGR2%5F102/Docs/R2%2D1809239%2Ezip> [retrieved on 20180607]

## Description

### TECHNICAL FIELD

Embodiments herein relate to a User Equipment (UE) and a method therein. In some aspects, they relate to performing a resume procedure of a connection between the UE and a network node in a wireless communications network.

### BACKGROUND

In a typical wireless communication network, wireless devices, also known as wireless communication devices, mobile stations, stations (STA) and/or User Equipments (UE), communicate via a Local Area Network such as a Wi-Fi network or a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques may significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

### Background Radio Resource Control (RRC) connection resume in LTE

In LTE Release 13, a mechanism was introduced for the UE to be suspended by the network in a suspended state similar to RRC_IDLE but with the difference that the UE stores the Access Stratum (AS) context or RRC context. This makes it possible to reduce the signaling when the UE is becoming active again by resuming the RRC connection, instead of as prior to establish the RRC connection from scratch. Reducing the signaling may have several benefits:
- Reduce latency e.g. for UEs such as smart phones accessing Internet
- Reduced signaling, which leads to reduce battery consumption for UE:s such as machine type devices sending very little data.

The Release 13 solution is based on that the UE sends a RRC Connection Resume Request (*RRCConnectionResumeRequest*) message to the network such as a network node in the network and in response receives an RRC Connection Resume (*RRCConnectionResume*) message from the network. The *RRCConnectionResume* message is not encrypted but integrity protected.

### RRC_INACTIVE in NR and in LTE Release 15

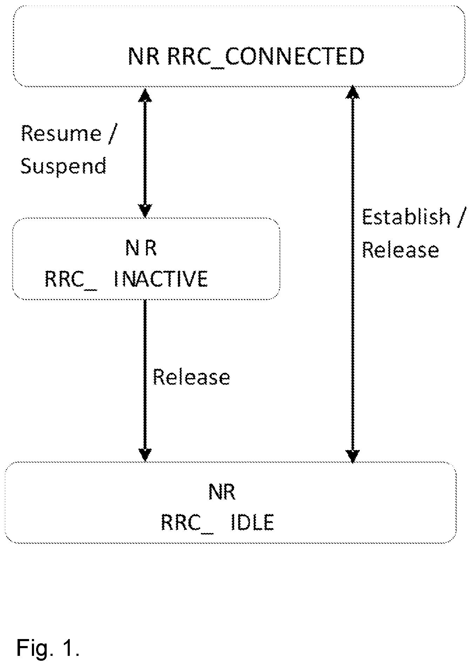

As part of the standardized work on 5G NR in 3GPP it has been decided that NR should support an RRC_INACTIVE state with some similar properties as the suspended state in LTE Release 13. The RRC_INACTIVE has slightly different properties from the late state in that it is a separate RRC state and not part of RRC_IDLE as in LTE. Additionally the CN/RAN connection (NG or N2 interface) is kept for RRC_INACTIVE while it was suspended in LTE. **Figure 1** shows possible state transitions of a UE in NR. The properties of the states above are as follows:

### RRC_IDLE:

- A UE specific Discontinuous Reception (DRX) may be configured.
- UE controlled mobility based on network configuration;
- The UE:
   - Monitors a Paging channel for CN paging using 5G-S- Temporary Mobile Subscriber Identity (TMSI);
   - Performs neighbouring cell measurements and cell (re-) selection;
   - Acquires system information.

### RRC_INACTIVE:

- A UE specific DRX may be configured;
- UE controlled mobility based on network configuration;
- The UE stores the AS context;
- The UE:
   - Monitors a Paging channel for CN paging using 5G-S-TMSI and RAN paging using I- (RNTI);
   - Performs neighbouring cell measurements and cell (re-) selection;
   - Performs RAN-based notification area updates periodically and when moving outside the RAN-based notification area;
- Acquires system information.

### RRC_CONNECTED:

- The UE stores the AS context.
- Transfer of unicast data to/from UE.
- At lower layers, the UE may be configured with a UE specific DRX;
- For UEs supporting Carrier Aggregation (CA), use of one or more SCells, aggregated with the SpCell, for increased bandwidth; SpCell when used herein means the Primary Cell (PCell) in the context of the Master Cell Group (MCG) or the Primary Secondary Cell (PSCell) in the context of the Secondary Cell Group (SCG), if the UE is operating/supporting Dual Connectivity (DC).
- For UEs supporting DC, use of one SCG, aggregated with the MCG, for increased bandwidth;
- Network controlled mobility, i.e. handover within NR and to/from E-UTRAN.
- The UE:
   - Monitors a Paging channel;
   - Monitors control channels associated with the shared data channel to determine if data is scheduled for it;
   - Provides channel quality and feedback information;
   - Performs neighbouring cell measurements and measurement reporting;
   - Acquires system information.

### Resume procedure in NR and LTE Release 15 including security aspects which are underlined below

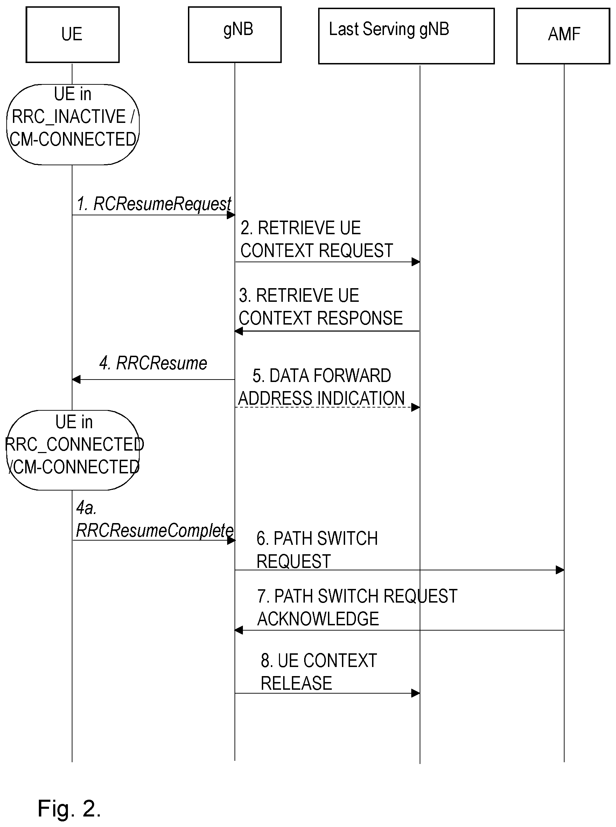

**Figure 2** describes a UE triggered transition from RRC_INACTIVE to RRC_CONNECTED:
1. The UE resumes from RRC_INACTIVE, providing the I-RNTI, allocated by the last serving network node such as gNB. In terms of security, the RRCResumeRequest is transmitted over SRB0, i.e., the message if not encrypted and not integrity protected.
   The UE also includes a security token, a 16 bit resume Message Authentication Code - Integrity (MAC-I)) computed based on old security keys.
2. The gNB, if able to resolve the gNB identity contained in the I-RNTI, requests the last serving gNB to provide UE Context data.
3. The last serving gNB provides UE context data if it can verify the UE.
4./4a. The gNB completes the resumption of the RRC connection. The RRC Resume message in 4a is encrypted and integrity protected based on new security keys. That is possible thanks to the reception of the parameter NCC in the message that suspends the UE (see next section in the background).
5. If loss of DL user data buffered in the last serving gNB shall be prevented, the gNB provides forwarding of addresses.
6./7. The gNB performs path switch.
8. The gNB triggers the release of the UE resources at the last serving gNB.

After step 1 above, when the gNB decides to reject the Resume Request and keep the UE in RRC_INACTIVE without any reconfiguration, or when the gNB decides to setup a new RRC connection, SRB0 (without security) may be used. When the gNB decides to reconfigure the UE, e.g. with a new DRX cycle or RAN-based Notification Area (RNA) RNA or when the gNB decides to push the UE to RRC_IDLE, Signaling Radio Bearer 1 (SRB1) with at least integrity protection shall be used.

NOTE: SRB1 may only be used once the UE Context is retrieved i.e. after step 3 in Figure 2.

### Network triggered transition from RRC_INACTIVE to RRC_CONNECTED

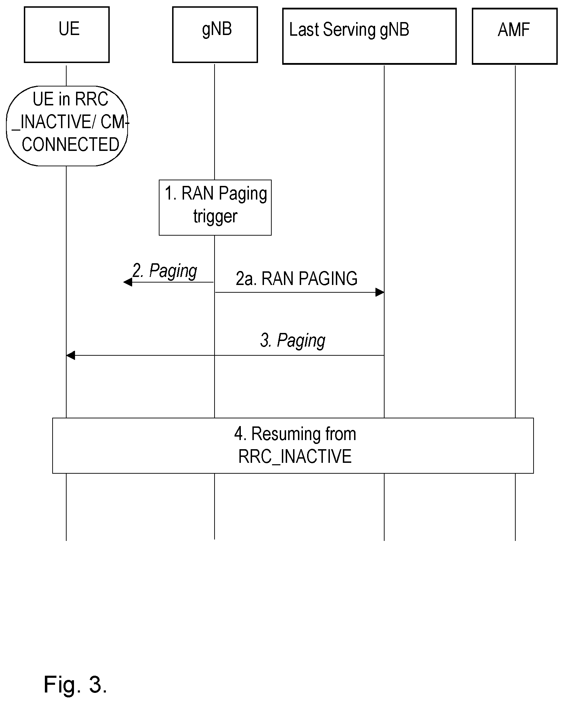

**Figure 3** describes the network triggered transition from RRC_INACTIVE to RRC_CONNECTED:
1. A RAN paging trigger event occurs such as incoming DL user plane, DL signaling from 5GC, etc.
2./2a. RAN paging is triggered; either only in the cells controlled by the last serving gNB or also by means of Xn RAN Paging in cells controlled by other network nodes such as gNBs, configured to the UE in the RAN-based Notification Area (RNA). Xn when used herein means the interface between gNBs.
3. The UE is paged with the I-RNTI.
4. If the UE has been successfully reached, it attempts to resume from RRC_INACTIVE.

### RAN-based Notification Area (RNA) update

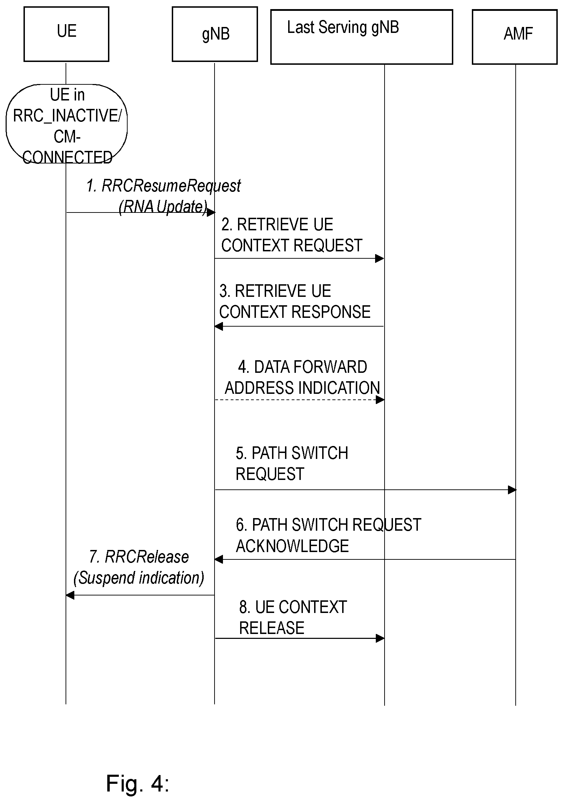

**Figure 4** describes the UE triggered RNA update procedure when it moves out of the configured RNA involving context retrieval over Xn:
1. The UE resumes from RRC_INACTIVE, providing the I-RNTI allocated by the last serving gNB and appropriate cause value, e.g., RAN notification area update.
2. The network node such as the gNB, if able to resolve the gNB identity contained in the I-RNTI, requests the last serving gNB to provide UE Context.
3. The last serving gNB provides UE context. The gNB may move the UE to RRC_CONNECTED, or to RRC_IDLE or keep the UE in RRC_INACTIVE state:
   - If the UE is moved to RRC_CONNECTED, RRCResume message is sent to the UE and the procedure continues.
   - If the UE is moved to RRC_IDLE, RRCRelease message is sent to the UE and the procedure ends.
   - If the UE is moved back to RRC_INACTIVE, the procedure continues with the following steps.
   From a security perspective, in any of these cases for this two-step procedure, the response message (RRCRelease) is also encrypted and integrity protected.
4. If loss of DL user data buffered in the last serving gNB shall be prevented, the gNB provides forwarding addresses.
5./6. The gNB performs path switch.
7. The gNB moves the UE back to RRC_INACTIVE state by sending RRCRelease with suspend indication.
8. The gNB triggers the release of the UE resources at the last serving gNB.
Although this has been described for NR, an equivalent procedure has been standardized for LTE from Release 15 for inactive UEs.

Document "WO 2017/048170 A1 (ERICSSON TELEFON AB L M [SE]) 23 March 2017 (2017-03-23)" may be constructed to disclose a method for operating a terminal device in a connected state with respect to a communication network. The method comprises receiving a first signal from a first radio access node in the communication network indicating that the connected state is to be suspended. The first signal comprises information for use in determining a first key for encrypting data to be sent between the terminal device and the first radio access node or another radio access node in the communication network if the connected state is resumed.

Document "NOKIA ET AL, "RRC connection establishment, re-establishment and resume", 3GPP DRAFT; R2-1705247 RRC CONNECTION ESTABLISHMENT, RE-ESTABLISHMENT, AND RESUME, 3RD GENERATION PARTNERSHIP PROJECT (3GPP), MOBILE COMPETENCE CENTRE; 650, ROUTE DES LUCIOLES; F-06921 SOPHIA-ANTIPO, vol. RAN WG2, no. Hangzhou, China; 20170515 - 20170519, (20170514), 14 May 2017" may be constructed to disclose procedures performed by a UE for RRC inactive state to RRC connected state transition. During the RRC inactive to RRC connected state transition, the UE is required to identify itself (i.e., identify resume identity as UE ID) along with an anchor gNB where a UE context is stored, code-establishment cause information, as well as to provide a security information for the UE integrity verification.

Document "ERICSSON (RAPPORTEUR), "Introduction of SA", 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Busan, South Korea; 20180521 - 20180525, 7 June 2018 (2018-06-07), XP051520562" may be constructed to disclose that the UE transmits a RRC resume request message for resumption of the RRC connection by indicating a resume identity, and a resume cause in the RRC resume request message.

Document "WO2018202941" may be constructed to disclose a method for security handling. The method comprises receiving in advance (by a UE), from a network node, new parameter and using the new parameter to generate new security keys, when the UE experiences, for example, radio link failure, or handover failure, or reconfiguration failure or any other radio failure. Further, the method comprises using (by the UE) the new security keys for a resume message from which the network node can determine integrity of the UE's resume message and authenticate the UE by omitting transmission of a complete message.

### SUMMARY

As a part of developing embodiments herein the inventors identified a problem which first will be discussed.

As described above, in the Resume procedure, both in NR and LTE Release 15, the RRCResumeRequest (first RRC message in the procedure from UE to the network) is sent over SRB0 (without encryption and without integrity protection) and includes a security token calculated based on old security keys i.e. the last keys the UE has used. While the expected response message in the successful cases (either an RRCResume or an RRCRelease in the case of RNA) is encrypted and integrity protected based on new security keys. To discuss a problem, the different parts of the procedures have been divided into Part 1, Part 2, and Part 3 below.

*The current handling of RRC resume is described in section 5.3.13 of 3GPP TS 38.331. Specifically, in section* 5.3.13.3 *it is stated that*

### 5.3.13.3 Actions related to transmission of RRCResumeRequest message

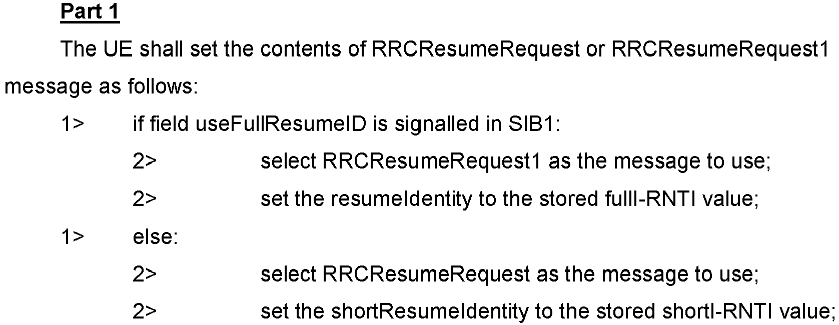

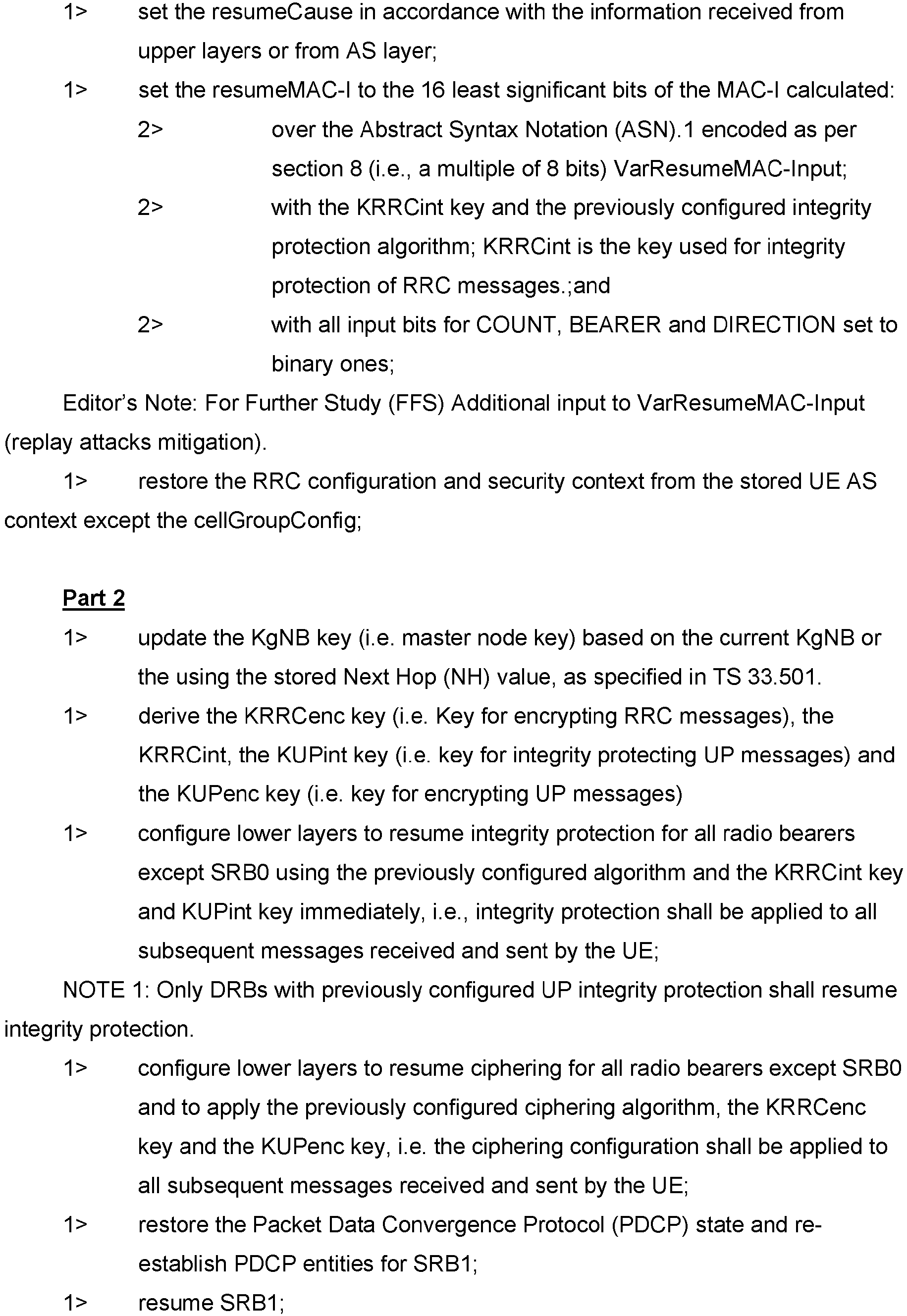

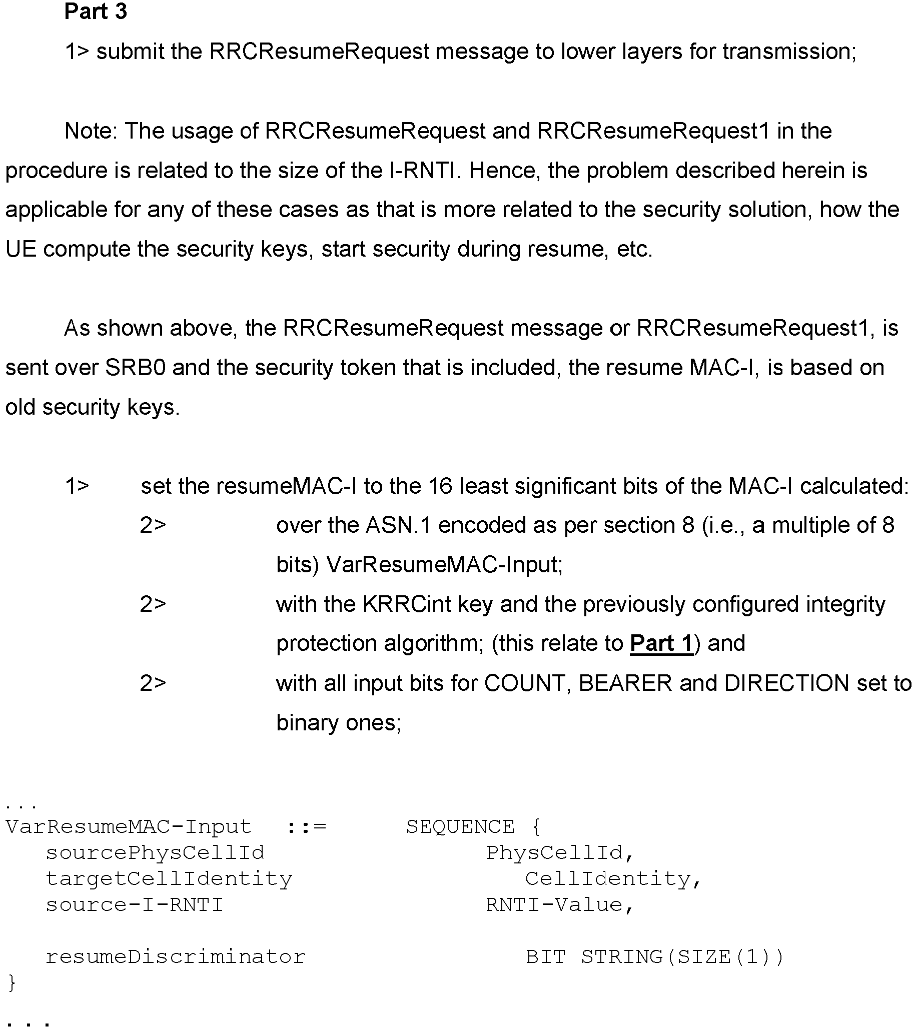

| ***VarShortResumeMAC-Input field descriptions*** |
|---|
| ***targetCellIdentity*** |
| Set to Cellldentity of the target cell i.e. the cell the UE is trying to resume. |
| ***source-c-RNTI*** |
| Set to C-RNTI that the UE had in the PCell it was connected to prior to suspension of the RRC connection. |

| ***VarShortResumeMAC-input field descriptions*** |
|---|
| ***sourcePhysCellld*** |
| Set to the physical cell identity of the PCell the UE was connected to prior to suspension of the RRC connection. |
| ***resumeDiscriminator*** |
| A constant that allows differentiation in the calculation of the MAC-I for *ResumeMAC-I.* The *resumeDiscriminator* is set to '1'. |

After **Part 1,** as the UE expects in the successful case a response that is encrypted and integrity protected based on new security keys, it is specified in **Part 2** that the UE refreshes security keys and starts security before sending RRCResumeRequest (or RRCResumeRequest1). **Part 3** is basically the transmission of the RRCResumeRequest (or RRCResumeRequest1).

However, **Part 2** is not required for **Part 3.** Thus, performing part 2 before part 3 will unnecessarily delay the transmission of the Resume request, and thereby delay the resumption of the connection. That impacts an important Key Performance Indicator (KPI), the control latency, which is basically the delay to perform the resume procedure i.e. the transition from RRC_INACTIVE to RRC_CONNECTED.

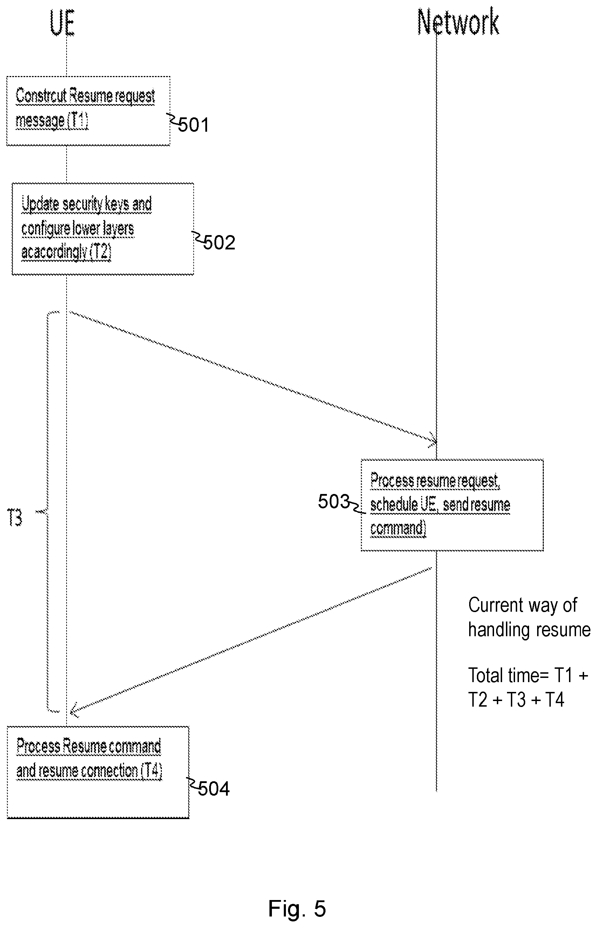

**Figure 5** schematically shows the resume procedure in view of the time it takes to perform different parts of the procedure:
**501.** The UE constructs a resume request, which takes time **T1.**
**502.** The UE updates security keys and configures lower layers accordingly, which takes time **T2.**

The UE then sends the resume request message to the network.

**503.** The network such as a network node processes the resume request, secedules the UE and sends a resume command, which takes time **T3.**

**504.** The UE processes the resume command and resumes the connection, which takes time **T4.**

The current way of handling resume Total time= T1 + T2 + T3 + T4
The invention is defined by the independent claims. Further, embodiments of the invention are defined by the claims. Moreover, examples, embodiments and descriptions, which are not covered by the claims are presented not as embodiments of the invention, but as background art or examples useful for understanding the invention.

An object of embodiments herein is therefore to improve speed of resume procedures in a wireless communications network.

According to an aspect of embodiments herein, the object is achieved by a method performed by a User Equipment, UE, for performing a resume procedure of a connection between the UE and a network node, in a wireless communications network. The resume procedure relates to a transmission of the UE from an inactive state to a connected state.

While the UE is in inactive state, the UE performs security update procedures related to security information to be used in the resume procedure of the connection.

After receiving a resume command from the network node as a response to the resume request, the UE resumes the connection between the UE and the network node. The updated security information is used to protect the signalling between the UE and the network node.

According to a further aspect of embodiments herein, the object is achieved by a User Equipment, UE, for performing a resume procedure of a connection between the UE and a network node, in a wireless communications network. The resume procedure relates to a transmission of the UE from an inactive state to a connected state. The UE is configured to: While the UE is in inactive state, perform security update procedures related to security information to be used in the resume procedure of the connection, e.g. by means of a performing model in the UE, and after receiving a resume command from the network node as a response to the resume request, resume the connection between the UE and the network node, wherein the updated security information is adapted to be used to protect the signalling between the UE and the network node.

An advantage of embodiments herein is that UEs will be resumed faster as the security procedures are performed before the UE requests to initiate a resume procedure.

### BRIEF DESCRIPTION OF THE FIGURES

- **Figure 1**: is a schematic block diagram illustrating prior art.
- **Figure 2**: is a sequence diagram illustrating prior art.
- **Figure 3**: is a sequence diagram illustrating prior art.
- **Figure 4**: is a sequence diagram illustrating prior art.
- **Figure 5**: is a sequence diagram illustrating prior art.
- **Figure 6**: is a sequence diagram illustrating prior art.
- **Figure 7**: is a schematic block diagram illustrating embodiments of a wireless communications network.
- **Figure 8a**: is a flowchart depicting embodiments of a method in a UE.
- **Figure 8b**: is a flowchart depicting embodiments of a method in the UE.
- **Figure 8c**: is a sequence diagram depicting embodiments of a method.
- **Figures 9**: a and b are schematic block diagrams illustrating embodiments of a UE.
- **Figure 10**: schematically illustrates a telecommunication network connected via an intermediate network to a host computer.
- **Figure 11**: is a generalized block diagram of a host computer communicating via a base station with a user equipment over a partially wireless connection.
- **Figures 12-15**: are flowcharts illustrating methods implemented in a communication system including a host computer, a base station and a user equipment.

### DETAILED DESCRIPTION

Example embodiments herein relate to different ways to speed up the RRC resume procedure e.g. including the RNA update, by a UE performing security update procedures, like the update of security keys, without delaying the transmission of the resume request message.

In a **first group of embodiments,** the security update procedures, derivation of new security keys in target cell, configuration of lower layers to resume ciphering/integrity protection etc... , are performed after transmitting the RRC resume request, while the UE 120 is waiting for the RRC resume message, thereby not adding to the overall time required to resume the connection.

In a **second group of embodiments,** the security update procedures, derivation of new security keys in target cell, configuration of lower layers to resume ciphering/integrity protection, calculation of the RRC security token like the resume MAC-I, etc., are performed even before the request from upper layers or RRC to initiate a resume procedure, for example upon the suspension of the UE 120 and/or upon cell reselection/selection while in RRC_INACTIVE, thereby not adding to the overall time required to resume the connection.

An advantage of embodiments herein is that UEs will be resumed faster as the security procedures are performed either after the transmission of the resume request, i.e. updates are deferred until the resume request message is transmitted and while the UE is waiting for the resume command from the network, as in the first group of embodiments, or before the UE 120 requests to initiate a resume procedure, i.e. when the UE 120 is suspended the UE 120 prepares the security updates assuming it can resume in the same cell and perform updates upon selecting/re-selecting a new cell, as in the second group of embodiments.

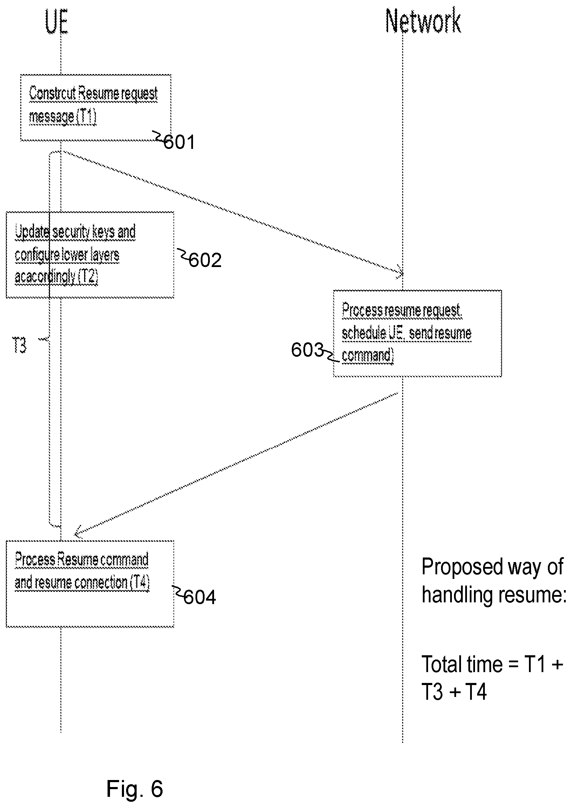

**Figure 6** illustrates the advantages of embodiments herein, for the first group of embodiments, as compared to the current way resume is handled in NR.

**601.** The UE 120 constructs a resume request, which takes time **T1.**

The UE 120 then sends the resume request message to the network.

**602.** The UE 120 updates security keys and configures lower layers accordingly, at the same time as the network such as a network node processes **603** the resume request, schedules the UE 120 and sends a resume command, which takes time **T3.**

**604.** The UE 120 processes the resume command and resumes the connection, which takes time **T4.**

The way of handling the resume process according to embodiments herein is speeded up since it takes only a total time= T1 + T3 + T4, which is shorter in time compared to the resume process of prior art shown in Figure 5 which takes T1 + T2 + T3 + T4.

For the second group of embodiments, due to pre-computing the resume MAC-I, the UE 120 is prepared to send an RRC Resume Request upon a request from upper layers to resume the connection or upon the request form RRC, in the case of RNA update, without the need to perform security actions, which speed up the overall resume procedure. And, due to the pre-computing of the new security keys, the UE 120 is prepared to receive RRC Resume message without the need to perform security actions before or after transmitting the resume request, which will speed up the overall resume procedure.

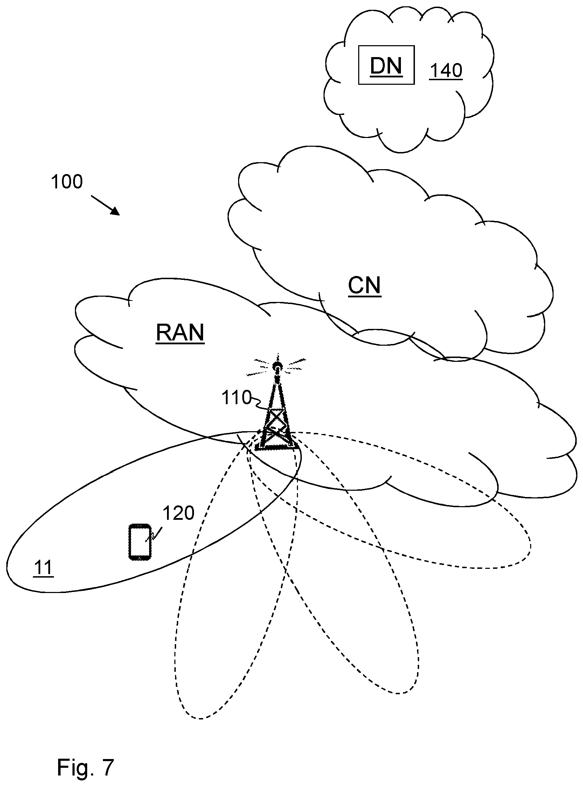

Embodiments herein relate to wireless communication networks in general. **Figure 7** is a schematic overview depicting **a wireless communications network 100.** The wireless communications network 100 comprises one or more RANs and one or more CNs. The wireless communications network 100 may use a number of different technologies, such as Wi-Fi, Long Term Evolution (LTE), LTE-Advanced, 5G, New Radio (NR), Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE.

In the wireless communication network 100, UEs such as **a UE 120** operate. The UE 120 may be a mobile station, a non-access point (non-AP) STA, a STA, a wireless terminals, and is capable to communicate via one or more Access Networks (AN), e.g. RAN, to one or more core networks (CN). It should be understood by the skilled in the art that "wireless device" is a non-limiting term which means any terminal, wireless communication terminal, user equipment, Machine Type Communication (MTC) device, Device to Device (D2D) terminal, or node e.g. smart phone, laptop, mobile phone, sensor, relay, mobile tablets or even a small base station communicating within a cell.

The wireless communications network 100 comprises one or more radio network nodes such as a **radio network node 110** providing radio coverage over a geographical area, **a service area 11,** which may also be referred to as a beam or a beam group of a first radio access technology (RAT), such as 5G, LTE, Wi-Fi or similar. The radio network node 110 may be a NG-RAN node, a transmission and reception point e.g. a base station, a radio access network node such as a Wireless Local Area Network (WLAN) access point or an Access Point Station (AP STA), an access controller, a base station, e.g. a radio base station such as a NodeB, an evolved Node B (eNB, eNode B), a gNB, a base transceiver station, a radio remote unit, an Access Point Base Station, a base station router, a transmission arrangement of a radio base station, a stand-alone access point or any other network unit capable of communicating with a wireless device within the service area served by the network node 110 depending e.g. on the first radio access technology and terminology used.

Methods herein may be performed by the UE 120. As an alternative, any Distributed Node (DN) and functionality, e.g. comprised in a **cloud 140** as shown in Figure 5, may be used for performing or partly performing the methods. The network aspects of embodiments herein may be deployed in a cloud environment.

### First group of embodiments

As mentioned above, two groups of embodiments are provided wherein:

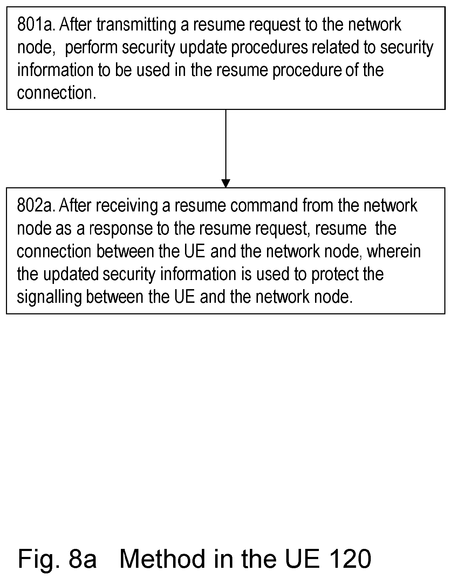

**Figure 8a** shows an example method performed by the UE 120 e.g. for performing a resume procedure, also referred to as speeding up the resume procedure, of a connection between the UE 120 and a network node 110, e.g. an RRC resume procedure, in the wireless communications network 100. The resume procedure may relate to a transmission of the UE 120 from an inactive state to a connected state, e.g. from RRC inactive state to RRC connected state.

According to the **first group of embodiments,** the UE 120 will send the resume request before updating the security information, and while waiting for the response from the network node 110, i.e. the resume command, the UE 120 will update the security information.

The method may comprise any of the actions below.

In **Action 801a,** after transmitting a resume request to the network node 110 the UE 120 performs security update procedures related to security information to be used in the resume procedure of the connection.

In **Action 802a,** after receiving a resume command from the network node 110 as a response to the resume request, the UE 120 resumes the connection between the UE 120 and the network node 110. The updated security information is used to protect the signalling between the UE 120 and the network node 110 in the resumed connection.

In these embodiments, the UE 120, when preparing the resume request message, will also update the security information, but it won't use them until it receives the resume message from the network in response to the request it has sent.

According to the first group of embodiments herein, the resume procedure is handled the following way instead of the way it is shown above according to prior art.

According to an example, the UE 120 shall set the contents of RRCResumeRequest or RRCResumeRequest1 message as follows:

### First group of embodiments:

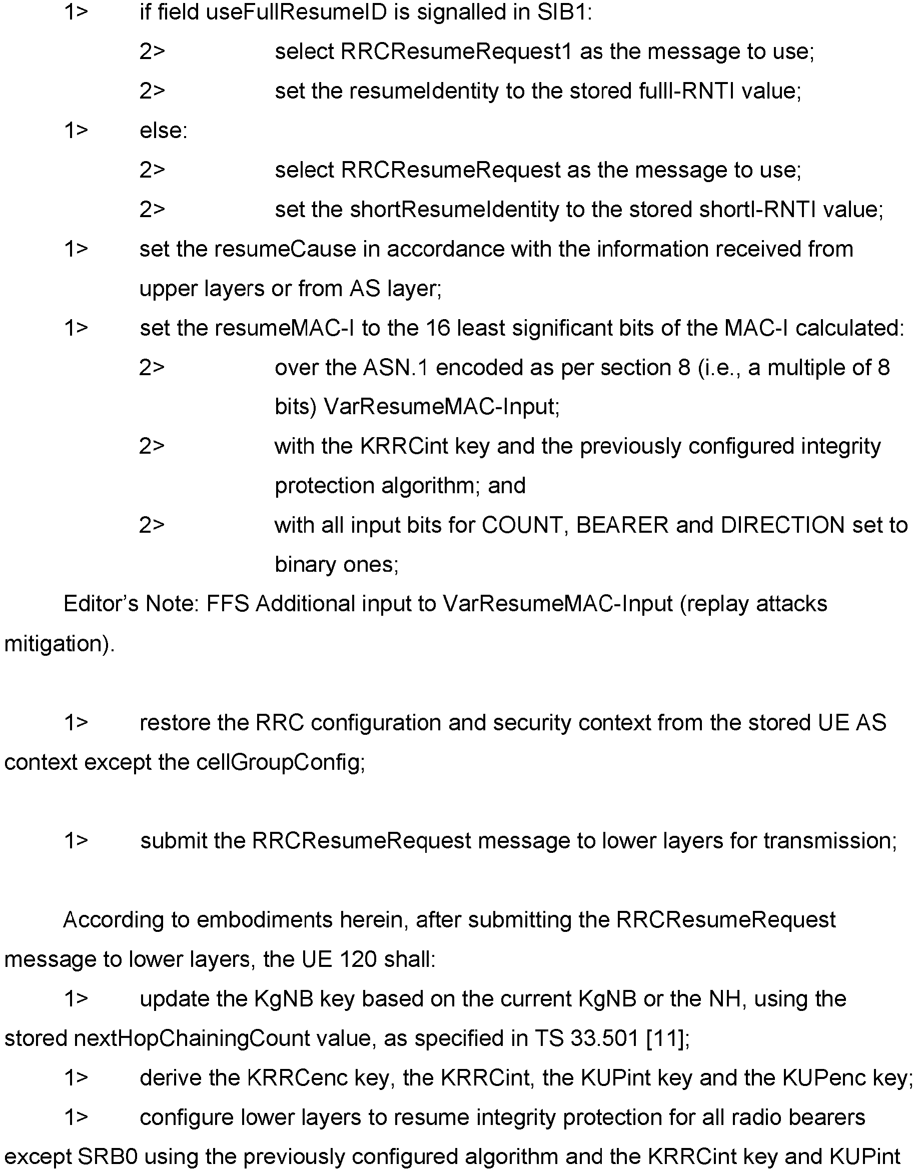

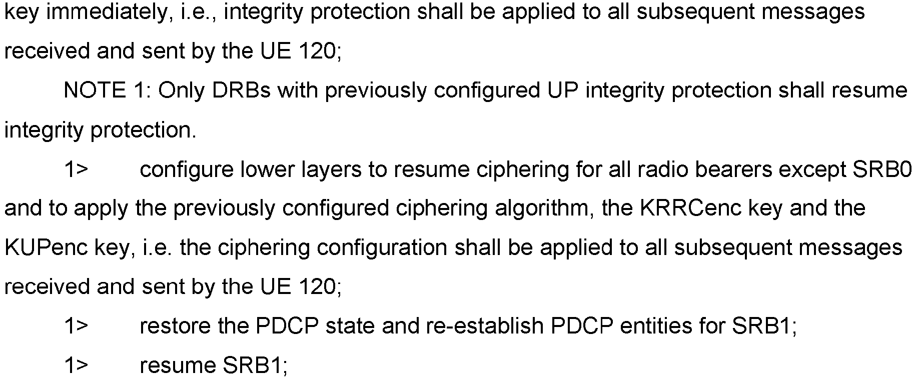

It should be noted that despite the way the standard is written, the embodiments herein may be applied as a UE 120 implementation, e.g.as the testing for the fulfilment of the requirement relates to the UE 120 being able to decode the RRC resume or RRC Release message upon the transmission of the Resume Request, despite a particular order described in the specifications.

### Second group of embodiments

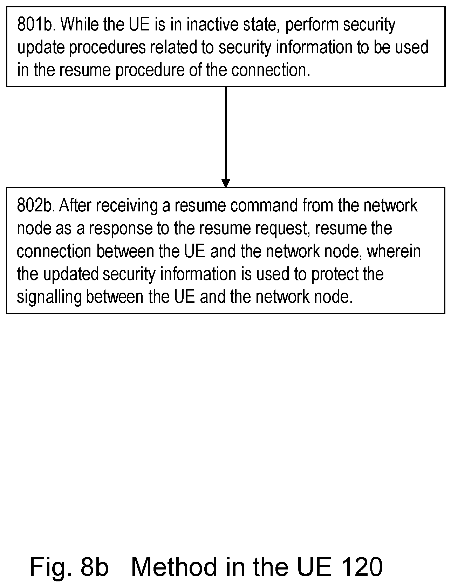

**Figure 8b** shows an example method performed by the UE 120 e.g. for performing a resume procedure, also referred to as speeding up the resume procedure, of a connection between the UE 120 and a network node 110, e.g. an RRC resume procedure, in the wireless communications network 100. The resume procedure may relate to a transition of the UE 120 from an inactive state to a connected state, e.g. from RRC inactive state to RRC connected state.

According to the **second group of embodiments,** the UE 120 will do the security update procedure immediately after being suspended, i.e. after being gone to INACTIVE state, and keep updating it when the UE 120 does cell reselection procedures, so that by the time the UE 120 starts the resume procedure, (i.e. prepares to send the resume request message, the UE 120 already have the correct security information.

The method will first be described in short and may comprise any of the actions below.

### Action 801b

While the UE 120 is in inactive state, such as e.g. in RRC_INACTIVE state, the UE 120 performs 801b security update procedures related to security information to be used in the resume procedure of the connection.

### Action 801b

After receiving a resume command from the network node 110 as a response to the resume request, the UE 120 resumes the connection between the UE 120 and the network node 110. The updated security information is used to protect the signalling between the UE 120 and the network node 110.

In some embodiments, performing of the security update procedures are initiated upon a suspension of the UE 120.

The security update procedures may be performed upon cell reselection and/or selection, while the UE 120 is in inactive state, such as e.g. in RRC_INACTIVE.

The security update procedures may e.g. comprise any one or more out of: Derivation of new security keys, configuration of lower layers to resume ciphering, configuration of lower layers to resume integrity protection, and calculation of RRC security token such as a resume Message Authentication Code, for Integrity MAC-I.

The security update procedures are procedures performed by the UE 120 itself, i.e. no communication with the network is required when performing security update procedure.

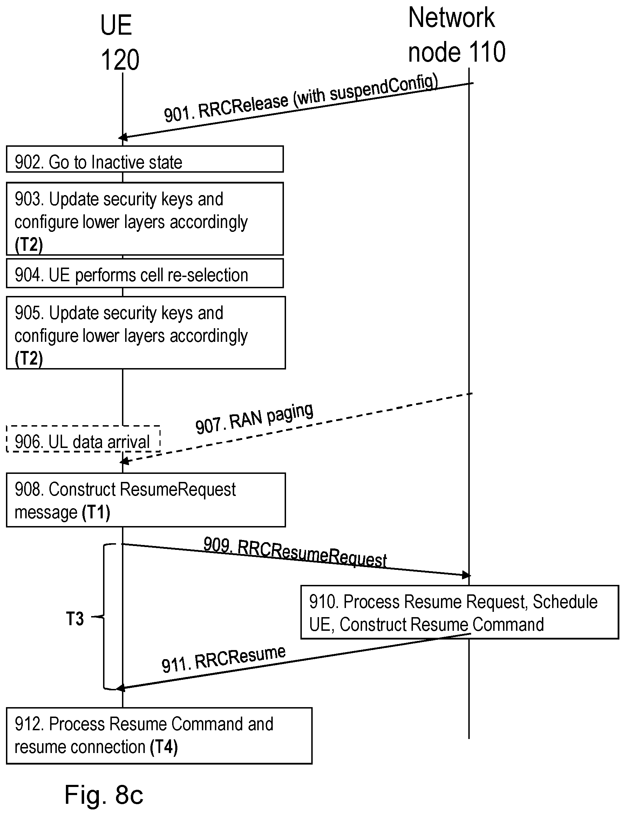

The sequence diagram of **Figure 8c** depicts an example of the second group of embodiments which first will be briefly described will be followed by a more detailed description and examples.

**Action 901.** The network node 110 sends an RRCRelease message with suspendConfig to the UE 120.

**Action 902.** The UE 120 goes to Inactive state.

**Action 903.** In inactive state, the UE 120 updates security keys and configure lower layers accordingly. The time this takes is comprised in the time referred to as (T2).

**Action 904.** In inactive state, the UE 120 further performs cell re-selection based on idle/inactive mode cell re-selection rules, e.g. the UE 120 moves out of the coverage area of the current cell that it was camping on.

**Action 905.** In inactive state, the UE 120 further updates security keys and configures lower layers accordingly. The time this takes is comprised in the time referred to as **(T2).**

**Action 906.** When the UE 120 is in inactive state, UL data may arrive.

**Action 907.** A DL data that is destined for the UE 120 may arrive at the network, upon which the network node sends a RAN paging message.

**Action 908.** When the UE 120 has received the RAN paging message, it constructs an RRCResumeRequest message. The time this takes is comprised in the time referred to as **(T1).**

**Action 909.** The constructed RRCResumeRequest message is sent to the network node 110. The time this takes is comprised in the time referred to as **T3.**

**Action 910.** The network node 110 processes the Resume Request, schedules the UE 120, and constructs the Resume command that will indicate to the UE to resume the RRC connection. The time this takes is also comprised in the time referred to as **T3.**

**Action 911.** The network node 110 then sends an RRCResume message to the UE 120. The time this takes is also comprised in the time referred to as **T3.**

**Action 912.** The UE 120 then processes Resume Command message and resumes the connection. The time this takes is comprised in the time referred to as **(T4).**

Provided way of handling resume according to embodiments herein: The total time = T1 + T3 + T4. This is since the parts of the process in time T2 is done when the UE 120 is in inactive state.

In a first example, upon receiving a suspend message, e.g. RRC Release with suspend configuration including the next hop chaining count - NCC, and entering RRC_INACTIVE, the UE 120 may compute the RRC security token (resume MAC-I), to be possibly included in the next RRC Resume Request message. For the computation, the UE 120 ,may use the old security keys, i.e. the keys in cell the UE 120 was suspended, and e.g. the following parameters associated to the cell the UE 120 was suspended:
- sourcePhysCellld = physical cell identity of the cell the UE 120 was suspended;
- targetCellldentity = cell identity of the cell the UE 120 was suspended;
- source-I-RNTI = I-RNTI received in the cell the UE 120 was suspended;

In a variant of the first example, the UE 120 may update the RRC security token (resume MAC-I) upon cell reselection. The UE 120 computes the RRC security token (resume MAC-I) to be possibly included in the next RRC Resume Request message in the newly selected/re-selected cell. For the computation, the UE 120 may use the old security keys, i.e. the keys in cell in which the UE 120 was suspended, and the following parameters associated to newly selected/re-selected cell:
- sourcePhysCellld = physical cell identity of the cell the UE 120 was suspended;
- targetCellldentity = cell identity of the newly selected/re-selected cell;
- source-I-RNTI = I-RNTI received in the cell the UE 120 was suspended;

By doing the actions described in the first example and variant, the UE 120 is prepared to send an RRC Resume Request upon a request from upper layers to resume the connection or upon the request form RRC (in the case of RNA update) without the need to perform security actions, which speed up the overall resume procedure.

In a second example, upon receiving a suspend message, e.g. RRC Release with suspend configuration including the next hop chaining count - NCC, and entering RRC_INACTIVE, the UE 120 may pre-perform security updates using as target cell the cell the UE 120 was suspended, in addition to existing parameters, not cell dependent. The first update is the KgNB key (KgNB*) using the parameters from the cell the UE 120 was suspended, in addition to the current KgNB or the NH, and using the received nextHopChainingCount. Two of these parameters may be assigned as follows:
- target Physical Cell ID (PCI) = PCI of the cell the UE 120 is suspended;
- target E-UTRA Absolute Radio Frequency Channel Number (ARFCN)-DL = ARFCN-DL of the cell the UE 120 is suspended.

Then, a second update is the derivation of K_{RRCint}, K_{RRCenc}, K_{UPenc}, and K_{UPint} from the newly updated K_{gNB}*.

In a variant of the second example, upon cell selection/re-selection while in RRC_INACTIVE, the UE 120 may perform security updates using as target cell the newly selected/re-selected cell (in addition to existing parameters, not cell dependent). The first update is the K_{gNB} key (K_{gNB}*) using the parameters from the newly selected/re-selected cell (in addition to the current K_{gNB} or the NH, and using the received *nextHopChainingCount*)*.* Two of these parameters may be assigned as follows:
- target PCI = PCI of the newly selected/re-selected cell;
- target ARFCN-DL = ARFCN-DL of the newly selected/re-selected cell.

Then, the second update is the derivation of K_{RRCint}, K_{RRCenc}, K_{UPenc}, and K_{UPint} from the newly updated K_{gNB}*.

By doing the actions described in the second example and variant, the UE 120 is prepared to receive a RRC Resume message without the need to perform security actions, which speed up the overall resume procedure.

Embodiments herein may be considered as having standard impact or being a UE 120-implementation patent. If that is to be standardized, the following may be an alternative. The embodiments herein show the new additions in different parts to illustrate these are independent parts which may be added together or not.

Below is an example showing on how the second example may be captured in the RRC specifications.

### Example of reception of the RRCRelease by the UE 120

### The UE 120 shall:

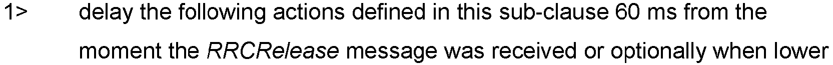

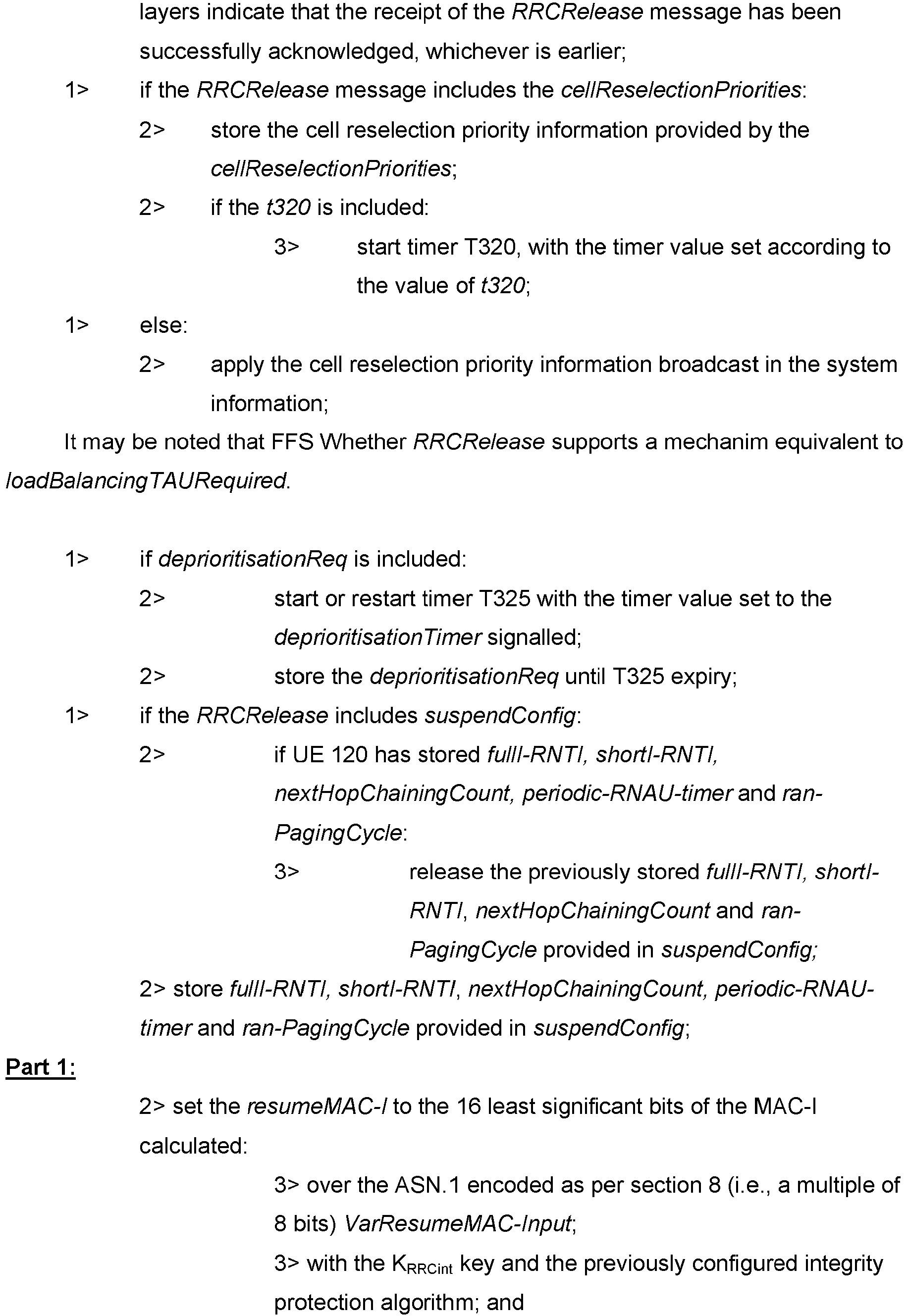

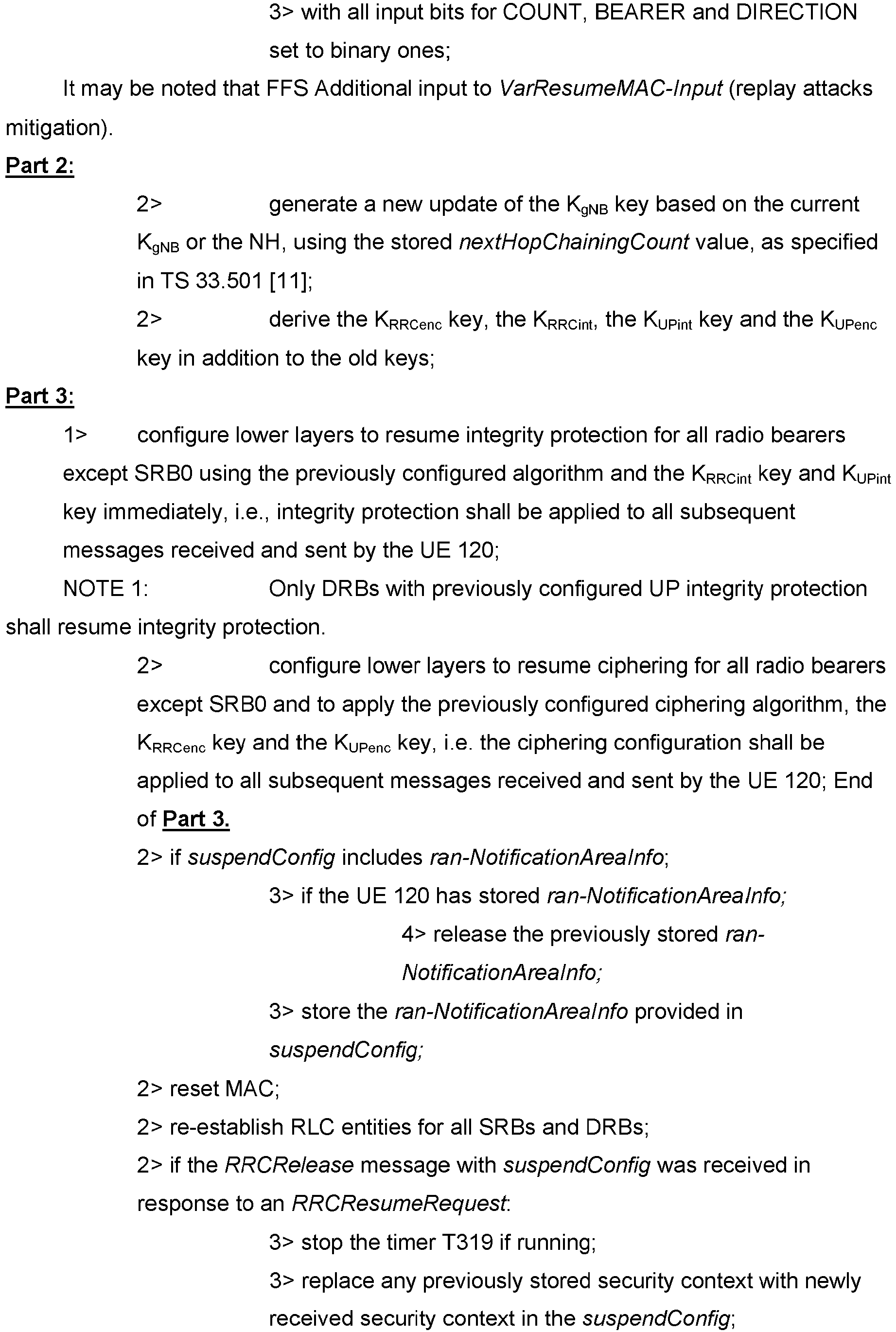

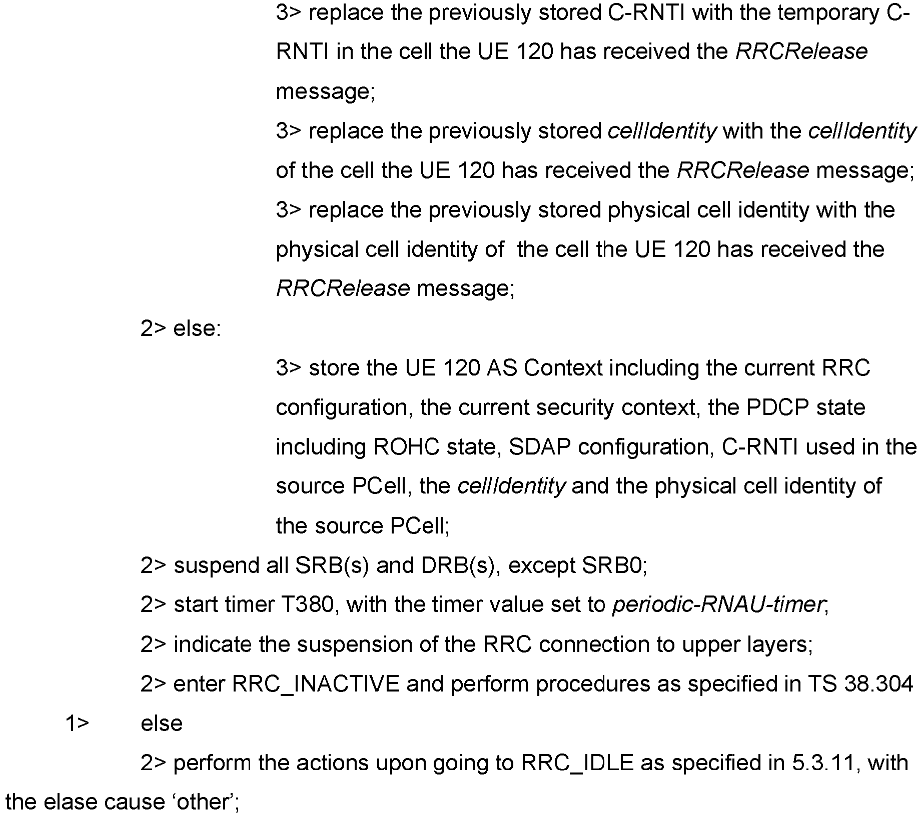

It may be FFS: Whether there needs to be different release causes and actions associated.

If that is to be a UE 120 implementation embodiment, the provided actions may still be performed regardless of the way the specifications are written. Notice that the testing of that is done by analyzing whether the UE 120 may include the correct resume MAC-I and whether the UE 120 may decrypt the response message to a resume request (e.g. resume or release message) and verify the network. Hence, a lower latency in that overall resume procedure is an evidence of the following implementation.

Another possible UE 120 implementation relies on the usage of parallel processing e.g. with a parallel circuitry at the UE 120 to perform security updates in parallel to the preparation of the transmission of the Resume Request. Then, instead of the serial steps described in the specifications, the preparation of the message and security procedures not necessary for the transmission of the message may be done in parallel so that the transmission of the RRC resume Request is not delayed. For example, for the update of Kgb* and the update security keys based on that, before transmitting the resume request, the parallel processing may be used.

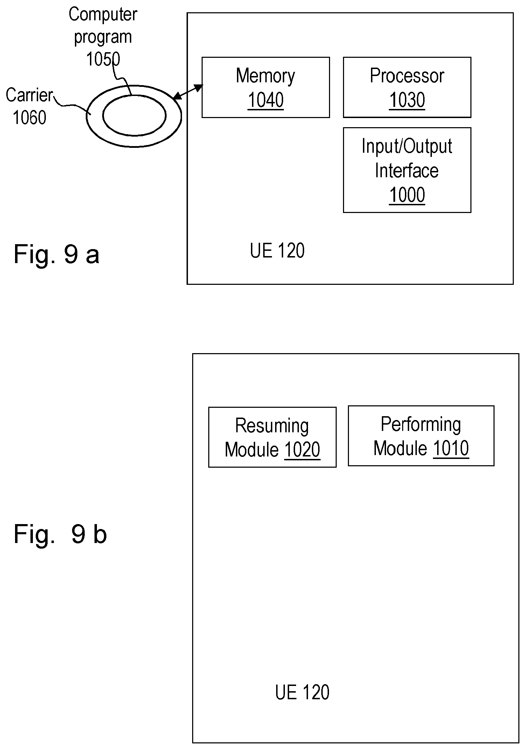

**Figure 9** **a** and **b** shows an example of arrangements in the UE 120.

The UE 120 may comprise **an input and output interface** configured to communicate with each other. The input and output interface may comprise a wireless receiver (not shown) and a wireless transmitter (not shown).

The UE 120 may comprise a **performing module 1010** and a **resuming module 1020** to perform the method actions as described herein.

The embodiments herein may be implemented through a respective processor or one or more processors, such as the **processor 1030** of a processing circuitry in the UE 120 depicted in Figure 9a, together with respective computer program code for performing the functions and actions of the embodiments herein. The program code mentioned above may also be provided as a computer program product, for instance in the form of a data carrier carrying computer program code for performing the embodiments herein when being loaded into the UE 120. One such carrier may be in the form of a CD ROM disc. It is however feasible with other data carriers such as a memory stick. The computer program code may furthermore be provided as pure program code on a server and downloaded to the UE 120.

The UE 120 may further comprise respective a **memory 1040** comprising one or more memory units. The memory comprises instructions executable by the processor in the UE 120.

The memory is arranged to be used to store instructions, data, configurations, and applications to perform the methods herein when being executed in the UE 120.

In some embodiments, a **computer program 1050** comprises instructions, which when executed by the at least one processor, cause the at least one processor of the UE 120 to perform the actions above.

In some embodiments, a respective **carrier 1060** comprises the computer program 1050, wherein the carrier is one of an electronic signal, an optical signal, an electromagnetic signal, a magnetic signal, an electric signal, a radio signal, a microwave signal, or a computer-readable storage medium.

Those skilled in the art will also appreciate that the functional modules in the UE 120, described below may refer to a combination of analog and digital circuits, and/or one or more processors configured with software and/or firmware, e.g. stored in the UE 120, that when executed by the respective one or more processors such as the processors described above cause the respective at least one processor to perform actions according to any of the actions above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

The embodiments herein are not limited to the above described preferred embodiments. Various alternatives, modifications and equivalents may be used.

### Further Extensions and Variations

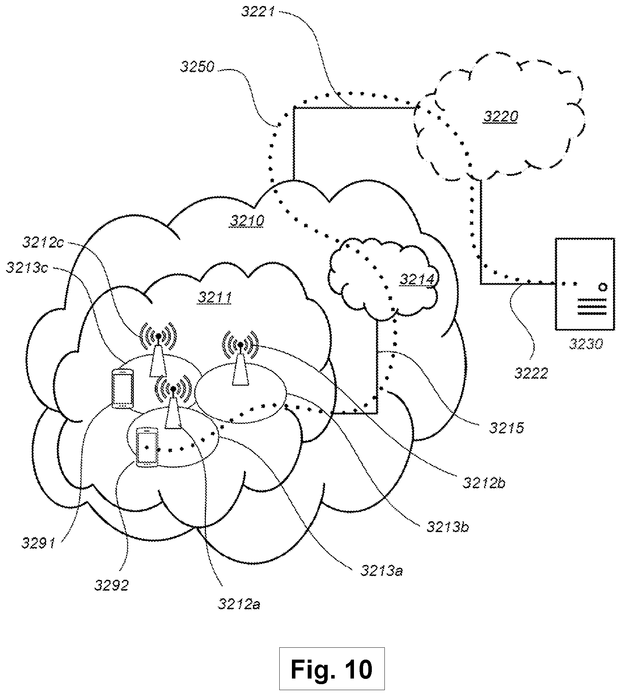

With reference to **Figure 10****,** in accordance with an embodiment, a communication system includes a telecommunication network 3210 such as the wireless communications network 100, e.g. an loT network, or a WLAN, such as a 3GPP-type cellular network, which comprises an access network 3211, such as a radio access network, and a core network 3214. The access network 3211 comprises a plurality of base stations 3212a, 3212b, 3212c, such as the network node 110, 130, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the UE 120 such as a Non-AP STA 3291 located in coverage area 3213c is configured to wirelessly connect to, or be paged by, the corresponding base station 3212c. A second UE 3292 e.g. the wireless device 122 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more subnetworks (not shown).

The communication system of Figure 10 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

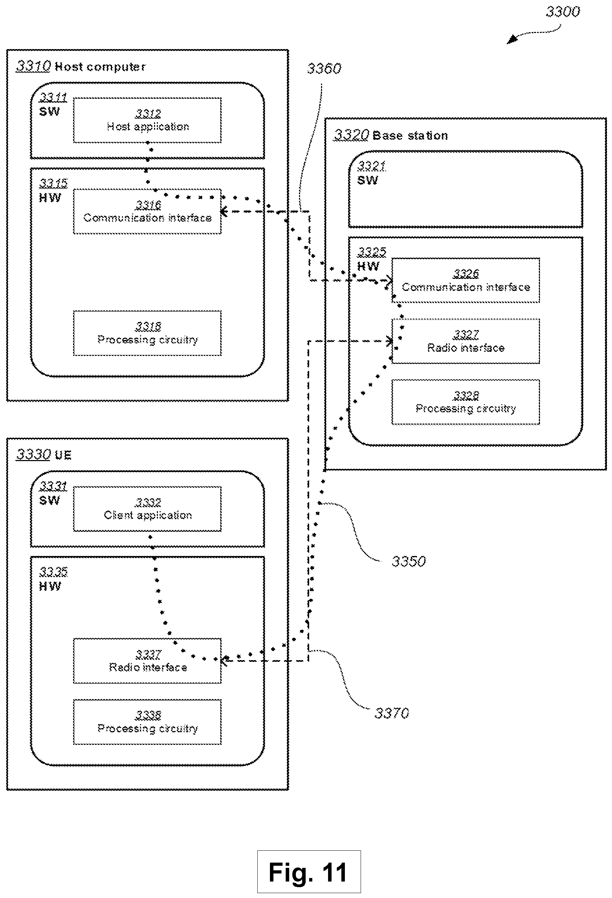

Example implementations, in accordance with an embodiment, of the UE, base station and host computer discussed in the preceding paragraphs will now be described with reference to **Figure 11****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.
The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown) served by the base station 3320. The communication interface 3326 may be configured to facilitate a connection 3360 to the host computer 3310. The connection 3360 may be direct or it may pass through a core network (not shown in Figure 11) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.
The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

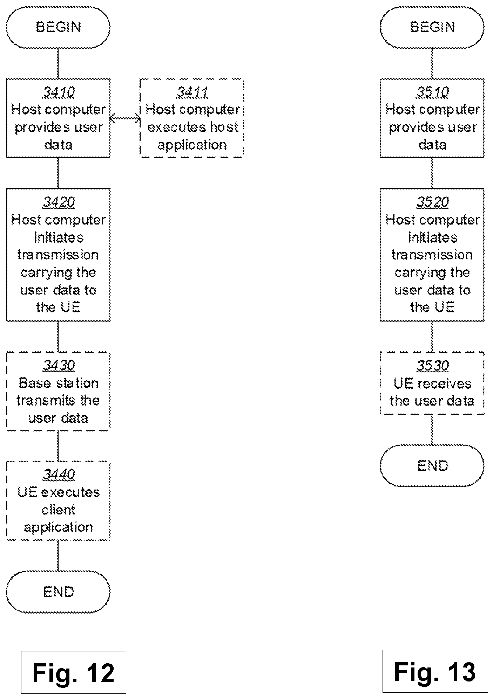

It is noted that the host computer 3310, base station 3320 and UE 3330 illustrated in Figure 11 may be identical to the host computer 3230, one of the base stations 3212a, 3212b, 3212c and one of the UEs 3291, 3292 of Figure 12, respectively. This is to say, the inner workings of these entities may be as shown in Figure 11 and independently, the surrounding network topology may be that of Figure 10.

In Figure 11, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the applicable RAN effect: data rate, latency, power consumption, and thereby provide benefits such as corresponding effect on the OTT service: e.g. reduced user waiting time, relaxed restriction on file size, better responsiveness, extended battery lifetime.

A measurement procedure may be provided for the purpose of monitoring data rate, latency and other factors on which the one or more embodiments improve.
There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

**Figure 12** is a flowchart illustrating a method implemented in a communication system, in accordance with one embodiment. The communication system includes a host computer, a base station such as the network node 110, and a UE such as the UE 120, which may be those described with reference to Figure 10 and Figure 11. For simplicity of the present disclosure, only drawing references to Figure 12 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

**Figure 13** is a flowchart illustrating a method implemented in a communication system, in accordance with one embodiment. The communication system includes a host computer, a base station such as a AP STA, and a UE such as a Non-AP STA which may be those described with reference to Figure 10 and Figure 11. For simplicity of the present disclosure, only drawing references to Figure 13 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

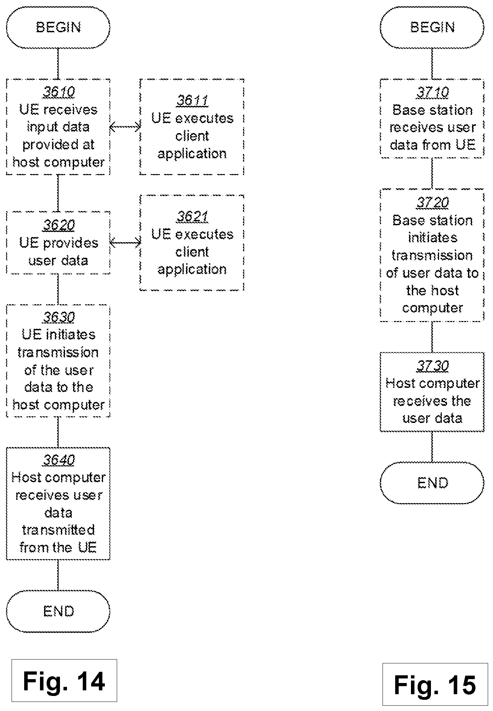

**Figure 14** is a flowchart illustrating a method implemented in a communication system, in accordance with one embodiment. The communication system includes a host computer, a base station such as a AP STA, and a UE such as a Non-AP STA which may be those described with reference to Figure 10 and Figure 11. For simplicity of the present disclosure, only drawing references to Figure 14 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

**Figure 15** is a flowchart illustrating a method implemented in a communication system, in accordance with one embodiment. The communication system includes a host computer, a base station such as a AP STA, and a UE such as a Non-AP STA which may be those described with reference to Figure 10 and Figure 11. For simplicity of the present disclosure, only drawing references to Figure 15 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

## Claims

1. A method performed by a User Equipment, UE, (120) for performing a resume procedure of a connection between the UE (120) and a network node (110), in a wireless communications network (100), where the resume procedure relates to a transition of the UE (120) from an inactive state to a connected state, the method comprising:
while the UE (120) is in inactive state, *performing* (801b) security update procedures related to security information to be used in the resume procedure of the connection, wherein the security update procedures comprise calculation of a Radio Resource Control, RRC, security token using old security keys associated to a cell in which the UE was suspended; and
after receiving a resume command from the network node (110) as a response to a resume request, *resuming* (802b) the connection between the UE (120) and the network node (110), wherein the updated security information is used to protect signalling between the UE (120) and the network node (110).

2. The method according to claim 1, wherein *performing* (801b) the security update procedures are initiated upon a suspension of the UE (120).

3. The method according to any of the claims 1-2, wherein *performing* (801b) the security update procedures are performed upon cell reselection and/or selection, while the UE (120) is in inactive state.

4. The method according to any of the claims 1-3, wherein the security update procedures further comprise:
derivation of new security keys, configuration of lower layers to resume ciphering, and configuration of lower layers to resume integrity protection.

5. A computer program (1050) comprising instructions, which when executed by a processor (1030), cause the processor (1030) to perform actions according to any of the claims 1-4.

6. A carrier (1060) comprising the computer program (1050) of claim 5, wherein the carrier (1060) is one of: an electronic signal, an optical signal, an electromagnetic signal, a magnetic signal, an electric signal, a radio signal, a microwave signal, or a computer-readable storage medium.

7. A User Equipment, UE, (120) for performing a resume procedure of a connection between the UE (120) and a network node (110), in a wireless communications network (100), where the resume procedure relates to a transition of the UE (120) from an inactive state to a connected state, wherein the UE (120) is configured to:
while the UE (120) is in inactive state, *perform* security update procedures related to security information to be used in the resume procedure of the connection, wherein the security update procedures comprise calculation of a Radio Resource Control, RRC, security token using old security keys associated to a cell in which the UE was suspended; and
after receiving a resume command from the network node (110) as a response to a resume request, *resume* the connection between the UE (120) and the network node (110), wherein the updated security information is adapted to be used to protect signalling between the UE (120) and the network node (110).

8. The User Equipment, UE, (120) according to claim 7, further being configured to *perform* the security update procedures initiated upon a suspension of the UE (120).

9. The User Equipment, UE, (120) according to any of the claims 7 or 8, further being configured to *perform* the security update procedures upon cell reselection and/or selection, while the UE (120) is in inactive state.

10. The User Equipment, UE, (120) according to any of the claims 7-9, wherein the UE (120) is further configured to include the security update procedures adapted to further comprise:
derivation of new security keys, configuration of lower layers to resume ciphering, and configuration of lower layers to resume integrity protection.

## Patentansprüche

1. Verfahren, das durch ein Benutzergerät, UE, (120) durchgeführt wird, zum Durchführen einer Wiederaufnahmeprozedur einer Verbindung zwischen dem UE (120) und einem Netzknoten (110) in einem drahtlosen Kommunikationsnetz (100), wobei sich die Wiederaufnahmeprozedur auf einen Übergang des UE (120) aus einem inaktiven Zustand in einen verbundenen Zustand bezieht, wobei das Verfahren Folgendes umfasst:
während sich das UE (120) im inaktiven Zustand befindet, *Durchführen* (801b) von Sicherheitsaktualisierungsprozeduren in Bezug auf Sicherheitsinformationen, die in der Wiederaufnahmeprozedur der Verbindung zu verwenden sind, wobei die Sicherheitsaktualisierungsprozeduren eine Berechnung eines Funkressourcensteuerungs-Sicherheitstokens, RRC-Sicherheitstokens, unter Verwendung alter Sicherheitsschlüssel, die einer Zelle zugeordnet sind, in der das UE gesperrt war, umfassen; und
nach Empfangen eines Wiederaufnahmebefehls von dem Netzknoten (110) als eine Reaktion auf eine Wiederaufnahmeanfrage, *Wiederaufnehmen* (802b) der Verbindung zwischen dem UE (120) und dem Netzknoten (110), wobei die aktualisierten Sicherheitsinformationen verwendet werden, um Signalübertragung zwischen dem UE (120) und dem Netzknoten (110) zu schützen.

2. Verfahren nach Anspruch 1, wobei das *Durchführen* (801b) der Sicherheitsaktualisierungsprozeduren bei einer Sperrung des UE (120) ausgelöst werden.

3. Verfahren nach einem der Ansprüche 1-2, wobei das *Durchführen* (801b) der Sicherheitsaktualisierungsprozeduren bei einer Neuauswahl und/oder Auswahl der Zelle durchgeführt werden, während sich das UE (120) im inaktiven Zustand befindet.

4. Verfahren nach einem der Ansprüche 1-3, wobei die Sicherheitsaktualisierungsprozeduren ferner Folgendes umfassen:
eine Ableitung von neuen Sicherheitsschlüsseln, eine Konfiguration niedrigerer Schichten zum Wiederaufnehmen von Chiffrierung und eine Konfiguration niedrigerer Schichten zum Wiederaufnehmen von Integritätsschutz.

5. Computerprogramm (1050), umfassend Anweisungen, die bei Ausführung durch einen Prozessor (1030) den Prozessor (1030) dazu veranlassen, Handlungen nach einem der Ansprüche 1-4 durchzuführen.

6. Träger (1060), umfassend das Computerprogramm (1050) nach Anspruch 5, wobei der Träger (1060) eines der Folgenden ist: ein elektronisches Signal, ein optisches Signal, ein elektromagnetisches Signal, ein magnetisches Signal, ein elektrisches Signal, ein Funksignal, ein Mikrowellensignal oder ein computerlesbares Speichermedium.

7. Benutzergerät, UE, (120) zum Durchführen einer Wiederaufnahmeprozedur einer Verbindung zwischen dem UE (120) und einem Netzknoten (110) in einem drahtlosen Kommunikationsnetz (100), wobei sich die Wiederaufnahmeprozedur auf einen Übergang des UE (120) aus einem inaktiven Zustand in einen verbundenen Zustand bezieht, wobei das UE (120) zu Folgendem konfiguriert ist:
während sich das UE (120) im inaktiven Zustand befindet, *Durchführen* von Sicherheitsaktualisierungsprozeduren in Bezug auf Sicherheitsinformationen, die in der Wiederaufnahmeprozedur der Verbindung zu verwenden sind, wobei die Sicherheitsaktualisierungsprozeduren eine Berechnung eines Funkressourcensteuerungs-Sicherheitstokens, RRC-Sicherheitstokens, unter Verwendung alter Sicherheitsschlüssel, die einer Zelle zugeordnet sind, in der das UE gesperrt war, umfassen; und
nach Empfangen eines Wiederaufnahmebefehls von dem Netzknoten (110) als eine Reaktion auf eine Wiederaufnahmeanfrage, *Wiederaufnehmen* der Verbindung zwischen dem UE (120) und dem Netzknoten (110), wobei die aktualisierten Sicherheitsinformationen dazu ausgelegt sind, verwendet zu werden, um Signalübertragung zwischen dem UE (120) und dem Netzknoten (110) zu schützen.

8. Benutzergerät, UE, (120) nach Anspruch 7, das ferner dazu konfiguriert ist, die Sicherheitsaktualisierungsprozeduren *durchzuführen,* die bei Sperrung des UE (120) ausgelöst werden.

9. Benutzergerät, UE, (120) nach einem der Ansprüche 7 oder 8, das ferner dazu konfiguriert ist, die Sicherheitsaktualisierungsprozeduren bei einer Neuauswahl und/oder Auswahl der Zelle *durchzuführen,* während sich das UE (120) im inaktiven Zustand befindet.

10. Benutzergerät, UE, (120) nach einem der Ansprüche 7-9, wobei das UE (120) ferner dazu konfiguriert ist, die Sicherheitsaktualisierungsprozeduren einzubeziehen, die dazu ausgelegt sind, ferner Folgendes zu umfassen:
eine Ableitung von neuen Sicherheitsschlüsseln, eine Konfiguration niedrigerer Schichten zum Wiederaufnehmen von Chiffrierung und eine Konfiguration niedrigerer Schichten zum Wiederaufnehmen von Integritätsschutz.

## Revendications

1. Procédé mis en œuvre par un équipement utilisateur, UE, (120) pour effectuer une procédure de reprise d'une connexion entre l'UE (120) et un nœud de réseau (110), dans un réseau de communication sans fil (100), où la procédure de reprise concerne une transition de l'UE (120) d'un état inactif à un état connecté, le procédé comprenant :
pendant que l'UE (120) est dans un état inactif, *la réalisation* (801b) de procédures de mise à jour de sécurité liées aux informations de sécurité à utiliser dans la procédure de reprise de la connexion, les procédures de mise à jour de sécurité comprenant le calcul d'un jeton de sécurité de commande des ressources radio, RRC, à l'aide d'anciennes clés de sécurité associées à une cellule dans laquelle l'UE a été suspendu ; et
après avoir reçu une commande de reprise du nœud de réseau (110) en réponse à une demande de reprise, la reprise (802b) de la connexion entre l'UE (120) et le nœud de réseau (110), les informations de sécurité mises à jour étant utilisées pour protéger la signalisation entre l'UE (120) et le nœud de réseau (110).

2. Procédé selon la revendication 1, dans lequel la réalisation (801b) des procédures de mise à jour de sécurité est initiée lors d'une suspension de l'UE (120).

3. Procédé selon l'une quelconque des revendications 1 à 2, dans lequel la réalisation (801b) des procédures de mise à jour de sécurité est effectuée lors de la resélection et/ou de la sélection de cellule, tandis que l'UE (120) est dans un état inactif.

4. Procédé selon l'une quelconque des revendications 1 à 3, dans lequel les procédures de mise à jour de sécurité comprennent en outre :
la dérivation de nouvelles clés de sécurité, la configuration de couches inférieures pour reprendre le chiffrement et la configuration de l'intégrité de couches inférieures pour reprendre la protection.

5. Programme informatique (1050) comprenant des instructions qui, lorsqu'elles sont exécutées par un processeur (1030), amènent le processeur (1030) à réaliser des actions selon l'une quelconque des revendications 1 à 4.

6. Support (1060) comprenant le programme informatique (1050) selon la revendication 5, dans lequel le support (1060) est l'un parmi : un signal électronique, un signal optique, un signal électromagnétique, un signal magnétique, un signal électrique, un signal radio, un signal micro-ondes ou un support de stockage lisible par ordinateur.

7. Equipement utilisateur, UE, (120) pour réaliser une procédure de reprise d'une connexion entre l'UE (120) et un nœud de réseau (110), dans un réseau de communication sans fil (100), où la procédure de reprise concerne une transition de l'UE (120) d'un état inactif à un état connecté, l'UE (120) étant configuré pour :
pendant que l'UE (120) est dans un état inactif, réaliser des procédures de mise à jour de sécurité liées aux informations de sécurité à utiliser dans la procédure de reprise de la connexion, les procédures de mise à jour de sécurité comprenant le calcul d'un jeton de sécurité de commande des ressources radio, RRC, à l'aide d'anciennes clés de sécurité associées à une cellule dans laquelle l'UE a été suspendu ; et
après avoir reçu une commande de reprise du nœud de réseau (110) en réponse à une demande de reprise, *reprendre* la connexion entre l'UE (120) et le nœud de réseau (110), les informations de sécurité mises à jour étant adaptées pour être utilisées pour protéger la signalisation entre l'UE (120) et le nœud de réseau (110).

8. Equipement utilisateur, UE, (120) selon la revendication 7, étant en outre configuré pour *réaliser* les procédures de mise à jour de sécurité initiées lors d'une suspension de l'UE (120).

9. Equipement utilisateur, UE, (120) selon l'une quelconque des revendications 7 ou 8, étant en outre configuré pour *réaliser* les procédures de mise à jour de sécurité lors de la resélection et/ou de la sélection de cellule, tandis que l'UE (120) est dans un état inactif.

10. Equipement utilisateur, UE, (120) selon l'une quelconque des revendications 7 à 9, dans lequel l'UE (120) est en outre configuré pour inclure les procédures de mise à jour de sécurité adaptées pour comprendre en outre :
la dérivation de nouvelles clés de sécurité, la configuration des couches inférieures pour reprendre le chiffrement et la configuration de l'intégrité des couches inférieures pour reprendre la protection.
